Europäisches Patentamt

European Patent Office

Office européen des brevets

(11) Publication number: **0 368 336 B1**

(19)

(12) **EUROPEAN PATENT SPECIFICATION**

(45) Date of publication of patent specification: **20.10.93** (51) Int. Cl.⁵: **C22C 29/04**, C22C 1/05

(21) Application number: **89120885.2**

(22) Date of filing: **10.11.89**

(54) **Cermet blade member for cutting-tools and process for producing same.**

(30) Priority: **11.11.88 JP 285215/88**

(43) Date of publication of application:
**16.05.90 Bulletin 90/20**

(45) Publication of the grant of the patent:
**20.10.93 Bulletin 93/42**

(84) Designated Contracting States:
**DE FR GB IT**

(56) References cited:
**EP-A- 0 259 192**
**EP-A- 0 337 696**

(73) Proprietor: **MITSUBISHI MATERIALS CORPORATION**
**6-1, Otemachi 1-chome**
**Chiyoda-ku Tokyo(JP)**

(72) Inventor: **Odani, Niro c/o Tokyo-Seisakusho**
**Mitsubishi Kinzoku K.K.**
**1-27-20, Nishishinagawa**
**Shinagawa-ku Tokyo(JP)**
Inventor: **Yoshioka, Kazuyoshi c/o Tokyo-Seisakusho**
**Mitsubishi Kinzoku K.K.**
**1-27-20, Nishishinagawa**
**Shinagawa-ku Tokyo(JP)**
Inventor: **Sekiya, Shinichi c/o Tokyo-Seisakusho**
**Mitsubishi Kinzoku K.K.**
**1-27-20, Nishishinagawa**
**Shinagawa-ku Tokyo(JP)**

(74) Representative: **Hansen, Bernd, Dr.rer.nat. et al**
**Hoffmann, Eitle & Partner,**
**Patentanwälte,**
**Postfach 81 04 20**
**D-81904 München (DE)**

**Description**

BACKGROUND OF THE INVENTION

Field of the Invention

The present invention relates to a cermet blade member which is particularly suitable for cutting-tools used in interrupted cutting operations under particularly severe conditions.

Prior Art

As disclosed in Japanese Unexamined Patent Application Publication No. 54-139815, there was hitherto developed a cermet blade member which consists, apart from unavoidable impurities, of a binder phase of 5% to 30% by weight of at least one of cobalt (Co) and nickel (Ni); and a dispersed phase of a balance composite carbo-nitride of titanium (Ti) with at least one of the elements of tungsten (W), molybdenum (Mo), tantalum (Ta), niobium (Nb), hafnium (Hf) and zirconium (Zr); and which includes a hard surface layer wherein hardness is greatest at the surface.

The aforesaid cermet blade member is manufactured by a sintering method which includes heating a green compact of a prescribed blend composition to a prescribed temperature of no greater than the liquid phase-emerging temperature in a carburizing atmosphere of CO and $CH_4$, or the like, and subsequently carrying out the temperature elevating step to a sintering temperature and a subsequent holding step in a vacuum.

The aforesaid blade member exhibits a superior wear resistance when used for cutting-tools designed for high speed cutting of steel or the like. However, the blade member is susceptible to fracture or chipping when used for interrupted cutting or heavy duty cutting operations where a greater toughness and shock resistance are required, so that the blade member cannot be employed under such circumstances.

SUMMARY OF THE INVENTION

It is therefore an object of the present invention to provide a cermet blade member which not only exhibits superior wear resistance but also is less susceptible to fracture.

Another object of the invention is to provide a process for producing the above blade member.

According to a first aspect of the invention, there is provided a cermet blade member for cutting-tools, comprising a cermet substrate consisting, apart from unavoidable impurities, of a binder phase of 5% to 30% by weight of at least one element selected from the group consisting of cobalt and nickel; and the balance being a hard dispersed phase of composite carbo-nitride of titanium and at least one element selected from the group consisting of tungsten, molybdenum, tantalum, niobium, hafnium and zirconium, the composite carbo-nitride satisfying the relationship of $0.2 \leq b/(a + b) \leq 0.7$, where a and b denote atomic ratios of carbon and nitrogen, respectively; characterized in that the substrate includes a hard surface layer in which the maximum hardness is present at a depth between $5\mu m$ and $50\mu m$ from the substrate surface thereof, the substrate surface having hardness of 20% to 90% of said maximum hardness.

According to a second aspect of the invention, there is provided a process for producing a cermet blade member for cutting-tools, comprising the steps of mixing powders for forming the binder phase and the hard dispersed phase to provide a powder mixture of a prescribed composition, compacting the powder mixture into a green compact, and sintering the green compact to provide the substrate of the cermet, characterized in that the sintering step includes initial temperature elevation in a vacuum and subsequent temperature elevation to a temperature ranging from 1,100°C to a temperature range between 1400 and 1,500°C in a nitrogen atmosphere, and a subsequent sintering operation in a vacuum.

Preferred embodiments according to the invention are disclosed in the dependent claims.

BRIEF DESCRIPTION OF THE DRAWINGS

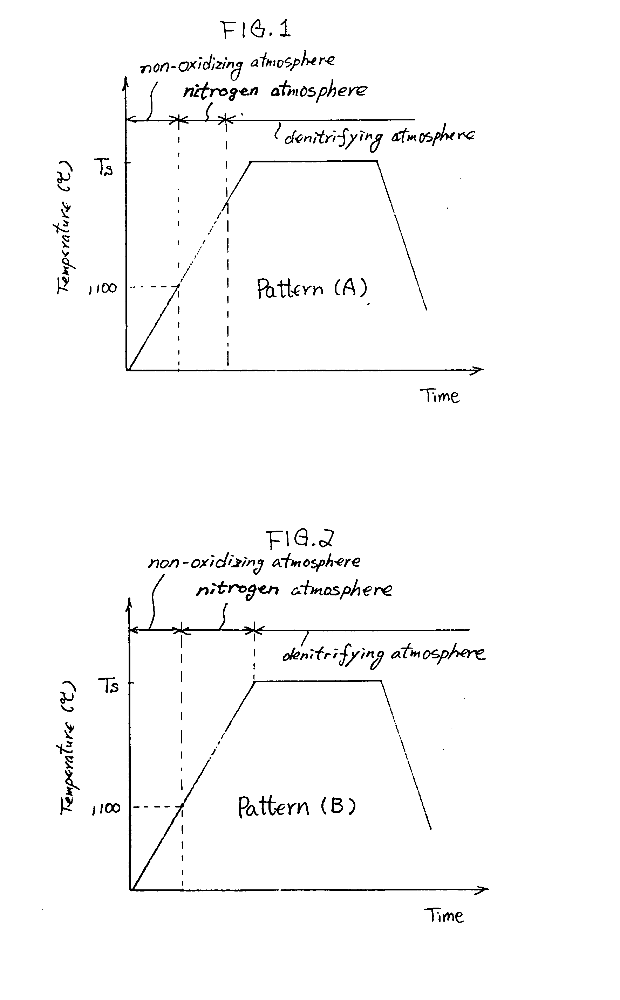

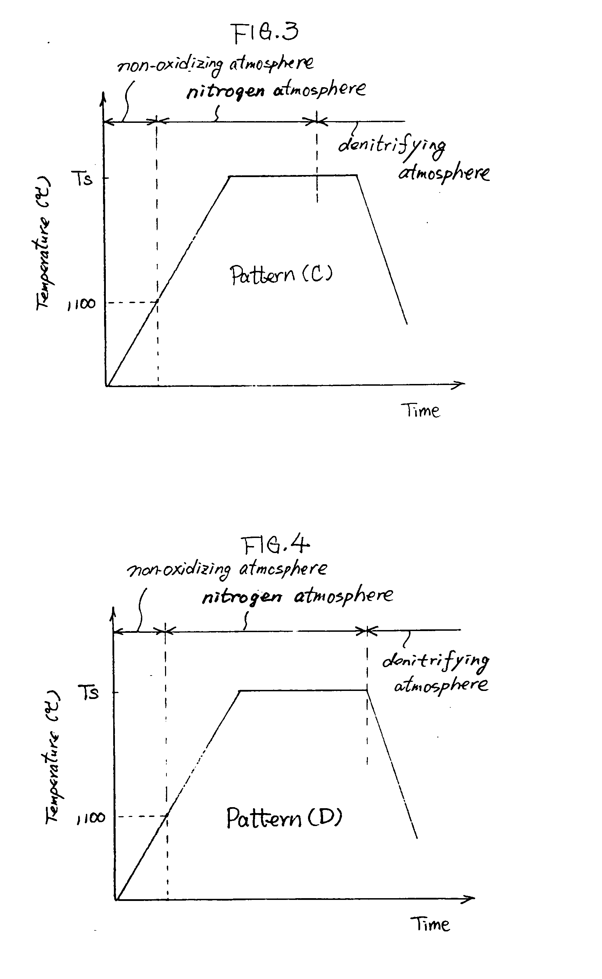

FIGS. 1 to 4 are diagrammatical representations showing several patterns of the sintering process in accordance with the process of the invention.

## EP 0 368 336 B1

## DETAILED DESCRIPTION OF THE INVENTION

The inventors have made an extensive study in order to improve the prior art cermet blade member and have produced a blade member in accordance with the present invention which comprises a cermet substrate consisting, apart from unavoidable impurities, of a binder phase of 5% to 30% by weight of at least one element selected from the group consisting of cobalt and nickel, and a hard dispersed phase of a balance composite carbo-nitride of titanium and at least one element selected from the group consisting of tungsten, molybdenum, tantalum, niobium, hafnium and zirconium. The dispersed phase may further contain at least one compound selected from the group consisting of tungsten carbide and titanium nitride. The composite carbo-nitride is formed so as to satisfy the relationship $0.2 \leq b/(a + b) \leq 0.7$, where $a$ and $b$ denote atomic ratios of carbon and nitrogen, respectively. In addition, the substrate includes a hard surface layer having the maximum hardness at a depth of between $5\mu m$ and $50\mu m$ from the substrate surface thereof, and the surface has a hardness of 20% to 90% of the above-mentioned maximum hardness value.

The blade member of the aforesaid construction has superior fracture resistance characteristics, and therefore exhibits superior cutting performance when used in interrupted cutting operations of steel or the like under particularly severe conditions. In addition, the blade member also exhibits a high wear resistance, and therefore the resulting cutting-tool achieves a good performance for high speed cutting for an extended period of time.

In the foregoing, cobalt and nickel are included to improve toughness of the substrate of the blade member. Accordingly, if the cobalt content or nickel content is below 5% by weight, the resulting blade member loses the required degree of toughness. On the other hand, if the content exceeds 30% by weight, the hardness and hence the wear resistance is lowered.

Furthermore, the substrate of the above blade member is formed so that the hardest region in the hard surface layer is present at a depth of between $5\mu m$ and $50\mu m$ from the substrate surface. If its position is shallower than $5\mu m$, the blade member cannot have desired fracture resistance characteristics. On the other hand, if the position is deeper than $50\mu m$, cutting edges of the blade member will be subjected to wear before the occurrence of a sufficient wear resistance effect by virtue of the hard surface layer, thereby reducing the cutting performance unduly.

In addition, the atomic ratios of carbon and nitrogen in the composite carbo-nitride have an influence on the degree of sintering for cermet and a hardness distribution in the substrate. If the ratio defined by $b/(a+b)$ is below 0.2, the nitrogen content is too low relative to the carbon content. As a result, in conjunction with sintering conditions, the hardest region in the substrate shifts toward the substrate surface, and therefore the hardest region cannot be maintained at the previously-described desired depth ranging between $5\mu m$ and $50\mu m$. On the other hand, if the above ratio exceeds 0.7, the nitrogen content is too high relative to the carbon content to maintain a sufficient degree of sintering, thereby failing to ensure the desired high degree of toughness.

Furthermore, if the hardness at the substrate surface is greater than 90% of the maximum hardness value, the difference between the hardness at the substrate surface and the maximum hardness is too small, and the blade member becomes susceptible to fracture. On the other hand, if the hardness at the substrate surface is less than 20% of the maximum hardness value, the substrate surface will be subjected to rapid wear, so that the life of the blade member is shortened.

Furthermore, in order to further improve the cutting performance, a hard coating having an average thickness of $0.5\mu m$ to $20\mu m$ may be formed on the substrate. The hard coating may be composed of either diamond or cubic boron nitride (CBN). The hard coating may also be composed of at least one compound selected from the group consisting of: a carbide, a nitride, an oxide and a boride of at least one element, selected from the class consisting of titanium, zirconium, hafnium, aluminum and silicon; and solid solution compounds of two or more of the carbide, nitride, oxide and boride of the at least one element. The hard coating may include one or more layers.

For producing the aforesaid blade member, a powder metallurgical process is utilized. Specifically, powders for forming the binder phase and the hard dispersed phase are first prepared and blended at a predetermined composition to provide a powder mixture. Thereafter, the mixture is compacted into a green compact and sintered. In the sintering operation, initial temperature elevation is effected in a vacuum. In the subsequent temperature elevation from $1,100°C$, above which nitrides or carbo-nitrides are susceptible to decomposition, to a sintering temperature Ts ranging from $1,400°C$ to $1,500°C$, a gaseous nitrogen atmosphere is used. Then, the subsequent sintering step including the cooling step is effected in a vacuum. According to the above sintering process, there are four possible patterns (A), (B), (C) and (D) as depicted in FIGS. 1 to 4, respectively. Among the four patterns, (B) and (C) are preferable in order to obtain a better blade member.

3

The hard coating of the aforesaid construction may be formed on the substrate thus produced by means of a known physical or chemical vapor deposition method.

In the above blade member, the position of the hardest region in the hard surface layer can be regulated by changing the ratio $b/(a+b)$ in the composite carbo-nitride during the blending step or by modifying the sintering conditions. For instance, if the blending is effected so that the ratio $b/(a+b)$ in the composite carbo-nitride in the resulting substrate becomes greater (i.e., the nitrogen content therein becomes greater), the hardest region will shift to the inner or deeper position, and accordingly the hardness at the substrate surface will be lowered. Moreover, if the sintering step in vacuum is prolonged to enhance the degree of denitrification, the position of the hardest region will shift inwardly of the substrate. On the other hand, if the step in vacuum is shortened, the hardest region will shift toward the substrate surface and hence the hardness at the substrate surface increases.

The present invention will now be described in detail with reference to the following example.

EXAMPLE

Powders of TiC, TiN, WC, $Mo_2C$, TaC, NbC, HfC, ZrC, Co and Ni were prepared, each of which having a prescribed average particle size ranging from $1\mu m$ to $1.5\mu m$. These powders were blended in various blend compositions depicted in Tables 1 to 4 and were subjected to wet mixing in a ball mill for 72 hours. After being dried, each mixture was pressed into a green compact of a shape in conformity with SNMG120408 of the ISO Standards. Subsequently, the green compact was sintered under the following conditions:

Specifically, the green compact was first heated from room temperature to $1,100^{\circ}C$ in a vacuum, and further heated from $1,100^{\circ}C$ to $1,450^{\circ}C$ in a nitrogen atmosphere of 10 torr ($6.89 \times 10^4$ Pa). Then, the atmosphere was removed to produce a vacuum of $10^{-2}$ torr ($6.89 \times 10^1$ Pa), in which the compact was held for 1 hour and in which the subsequent cooling step was carried out.

With the above sintering procedures, cutting inserts 1 to 23 of the invention were manufactured.

Furthermore, for comparison purposes, the green compacts having the same compositions as the cutting inserts of the invention were prepared and sintered under the following conditions:

Specifically, each compact was heated from room temperature to $1,100^{\circ}C$ in a gaseous carbon monoxide (CO) atmosphere of 50 torr ($3.45 \times 10^5$ Pa), and the subsequent operation, which included the temperature elevation step from $1,100^{\circ}C$ to $1,450^{\circ}C$ (starting temperature of the holding step), the holding step of the compact for 1 hour and the cooling step from the above temperature to the ordinary temperature, was effected in a vacuum of $10^{-2}$ torr ($6.89 \times 10^1$ Pa). With these procedures, comparative cutting inserts 1 to 23 were produced as depicted in Tables 5 to 8.

Then, the hardness, which was based on micro Vickers (load: 100g) measurements on an inclined surface having an angle of $11^{\circ}$, was measured for each cutting insert and the results are set forth in Tables 1 to 8. In the experiment, carbides and nitrides of a single element were used, but carbo-nitrides of a single element or a solid solution of composite carbides, nitrides or carbo-nitrides of plural elements could be used as well.

Subsequently, in order to evaluate fracture resistance characteristics, the cutting inserts thus obtained were subjected to dry-type interrupted cutting tests of steel under the following conditions:

Workpiece: square bar (JIS.SNCN439; Hardness: $H_B270$)

Cutting speed: 150 m/minute

Depth of cut: 2 mm

Feed rate: 0.3 mm/revolution

Cutting time: 2 minutes

In this test, the number of inserts subjected to fracture per ten was determined.

Similarly, in order to evaluate the wear resistance, all of the cutting inserts were subjected to a dry-type continuous high-speed cutting test, and flank wear was observed. The conditions of this test were as follows:

Workpiece: round bar (JIS.SCM415; Hardness: $H_B160$)

Cutting speed: 300 m/minute

Depth of cut: 1.5 mm

Feed rate: 0.2 mm/revolution

Cutting time: 20 minutes

The results of the above two tests are set forth in Tables 1 to 8.

As clearly seen from the results, the inserts of the present invention are comparable to the comparative cutting inserts in the degree of wear resistance. However, the inserts of the present invention exhibit greater

4

fracture resistance characteristics than the comparative inserts.

## TABLE 1

| Blend Composition (% by weight) | Composition of Substrate (% by weight) | $\dfrac{b}{a+b}$ | Substrate Surface hardness (Hv) | hardness percent (%) | Maximum Hardness (Hv) | Hardness Depth (μm) | Internal Hardness | Fractured Inserts / Tested Inserts | Frank Wear Width (mm) |
|---|---|---|---|---|---|---|---|---|---|
| 1 | Ni:6 TaC:8 Mo2C:10 TiN:20 TiC:other | Ni:6 (Ti,Ta,Mo)(CN): other | 0.24 | 1780 | 88.1 | 2020 | 5 | 1720 | 3/10 | 0.11 |
| 2 | Co:8 Ni:4 NbC:2 TaC:10 WC:10 Mo2C:10 TiN:30 TiC:other | Co:8 Ni:4 TiN:6 (Ti,Ta,Nb,W, Mo)(CN):other | 0.44 | 590 | 26.5 | 2230 | 40 | 1680 | 3/10 | 0.12 |
| 3 | Co:4 Ni:8 NbC:3 TaC:10 WC:10 Mo2C:10 TiN:30 TiC:other | Co:4 Ni:8 TiN:5 (Ti,Nb,Ta,W, Mo)(CN):other | 0.45 | 1580 | 75.6 | 2090 | 15 | 1670 | 1/10 | 0.12 |
| 4 | Co:10 Ni:5 NbC:5 TaC:10 WC:10 TiN:35 TiC:other | Co:10 Ni:5 TiN:10 (Ti,Ta,Nb,W)(CN): other | 0.50 | 730 | 37.2 | 1960 | 45 | 1650 | 0/10 | 0.24 |
| 5 | Co:12 Ni:4 TaC:15 WC:15 TiN:35 TiC:other | Co:12 Ni:4 TiN:8 (Ti,Ta,W)(CN): other | 0.55 | 1630 | 85.3 | 1910 | 15 | 1650 | 0/10 | 0.18 |
| 6 | Co:12 Ni:4 TaC:10 WC:30 TiN:25 TiC:other | Co:12 Ni:4 WC:8 (Ti,Ta,W)(CN): other | 0.44 | 1680 | 87.5 | 1960 | 20 | 1670 | 0/10 | 0.22 |

Cutting Inserts of the Invention

5

EP 0 368 336 B1

**TABLE 2**

| | Blend Composition (% by weight) | Composition of Substrate (% by weight) | $\dfrac{b}{a+b}$ | Substrate Surface | | Maximum Hardness | | Internal Hardness | Fratured Inserts | Frank Wear Width (mm) |
|---|---|---|---|---|---|---|---|---|---|---|
| | | | | hardness (Hv) | hardness percent (%) | Hardness (Hv) | Depth (μm) | | Tested Inserts | |
| 7 | Co:12 Ni:6 NbC:2 TaC:15 WC:15 TiN:20 TiC:other | Co:12 Ni:6 (Ti,Ta,Nb,W)(CN): other | 0.32 | 1600 | 87.9 | 1920 | 10 | 1590 | 0/10 | 0.16 |
| 8 | Co:10 Ni:8 TaC:5 NbC:5 WC:15 TiN:30 TiC:other | Co:10 Ni:8 TiN:5 (Ti,Ta,Nb,W)(CN): other | 0.45 | 1480 | 80.4 | 1940 | 20 | 1540 | 0/10 | 0.18 |
| 9 | Co:12 Ni:6 NbC:5 TaC:5 WC:25 TiN:35 TiC:other | Co:12 Ni:6 WC:10 TiN:3 (Ti,Ta,Nb,W)(CN):other | 0.59 | 860 | 44.6 | 1930 | 40 | 1520 | 0/10 | 0.25 |
| 10 | Co:10 Ni:6 NbC:2 TaC:10 WC:35 TiN:25 TiC:other | Co:10 Ni:6 WC:13 (Ti,Ta,Nb,W)(CN): other | 0.47 | 1280 | 63.7 | 2010 | 30 | 1610 | 0/10 | 0.25 |
| 11 | Co:12 Ni:6 NbC:3 TaC:8 WC:5 Mo2C:8 TiN:35 TiC:other | Co:12 Ni:6 TiN:8 (Ti,Ta,Nb,W, Mo)(CN) | 0.52 | 1180 | 57.6 | 2050 | 35 | 1540 | 0/10 | 0.19 |
| 12 | Co:15 Ni:10 NbC:5 TaC:10 TiN:45 TiC:other | Co:15 Ni:10 TiN:12 (Ti,Ta,Nb)(CN): other | 0.68 | 1380 | 76.7 | 1960 | 45 | 1450 | 0/10 | 0.27 |

Cutting Inserts of the Invention

Cutting Inserts of the Invention

## TABLE 3

| Blend Composition (% by weight) | Composition of Substrate (% by weight) | $\dfrac{b}{a+b}$ | Substrate Surface | | Maximum Hardness | | Internal Hardness | Fractured Inserts | Frank Wear Width (mm) |
|---|---|---|---|---|---|---|---|---|---|
| | | | hardness (Hv) | hardness percent (%) | Hardness (Hv) | Depth (µm) | | Tested Inserts | |
| 13 Co:14 Ni:14 ZrC:0.5 NbC:5 Mo2C:10 TiN:20 TiC:other | Co:14 Ni:14 (Ti,Zr,Nb, Mo)(CN):other | 0.31 | 1500 | 82.9 | 1960 | 25 | 1400 | 0/10 | 0.28 |
| 14 Co:14 Ni:14 ZrC:0.1 NbC:3 TaC:10 WC:10 TiN:40 TiC:other | Co:14 Ni:14 TiN:10(Ti,Zr,Nb, Ta,W)(CN):other | 0.46 | 680 | 33.8 | 2010 | 40 | 1380 | 0/10 | 0.30 |
| 15 Co:4 Ni:4 TaC:8 WC:6 Mo2C:8 TiN:20 TiC:other | Co:4 Ni:4 (Ti,Ta,W,Mo)(CN) :other | 0.25 | 1600 | 80.8 | 1980 | 10 | 1680 | 2/10 | 0.15 |
| 16 Co:6 Ni:6 TaC:10 WC:8 Mo2C:5 TiN:40 TiC:other | Co:6 Ni:6 TiN:10 (Ti,Ta,W, Mo)(CN):other | 0.55 | 760 | 35.8 | 1650 | 45 | 1650 | 1/10 | 0.17 |
| 17 Co:7 Ni:7 NbC:2 TaC:4 WC:10 Mo2C:10 TiN:30 TiC:other | Co:7 Ni:7 TiN:5 (Ti,Ta,Nb,W, Mo)(CN):other | 0.43 | 1630 | 75.8 | 2150 | 5 | 1640 | 0/10 | 0.16 |
| 18 Co:8 Ni:10 NbC:5 TaC:5 WC:8 Mo2C:8 TiN:30 TiC:other | Co:8 Ni:10 TiN:5 (Ti,Ta,Nb,W, Mo)(CN):other | 0.45 | 870 | 41.8 | 2080 | 40 | 1570 | 0/10 | 0.20 |

**TABLE 4**

Cutting Inserts of the Invention

| Blend Composition (% by weight) | Composition of Substrate (% by weight) | $\frac{b}{a+b}$ | Substrate Surface | | Maximum Hardness | | Internal Hardness | Fractured Inserts | Frank Wear Width (mm) |
|---|---|---|---|---|---|---|---|---|---|
| | | | hardness (Hv) | hardness percent (%) | Hardness (Hv) | Depth (μm) | | Tested Inserts | |
| 19 Co:16 NbC:10 WC:15 TiN:40 TiC:other | Co:16 TiN:10 (Ti,Nb,W)(CN): other | 0.57 | 1670 | 87.0 | 1920 | 10 | 1650 | 0/10 | 0.19 |
| 20 Co:10 Ni:12 TaC:5 Mo2C:10 WC:8 TiN:35 TiC:other | Co:10 Ni:12 TiN:8 (Ti,Ta,W,Mo)(CN): other | 0.56 | 610 | 28.6 | 2130 | 45 | 1420 | 0/10 | 0.25 |
| 21 Co:12 Ni:6 TaC:10 Mo2C:10 WC:15 TiN:20 TiC:other | Co:12 Ni:6 (Ti,Ta,Mo,W)(CN): other | 0.34 | 1520 | 80.4 | 1890 | 5 | 1620 | 0/10 | 0.20 |
| 22 Co:10 Ni:10 Mo2C:15 TiN:25 TiC:other | Co:10 Ni:10 TiN:3 (Ti,Mo)(CN): other | 0.35 | 1460 | 77.7 | 1880 | 10 | 1450 | 0/10 | 0.23 |
| 23 Co:20 Ni:5 TaC:5 Mo2C:5 WC:10 TiN:25 HfC:0.5 TiC:other | Co:20 Ni:5 TiN:3 (Ti,Ta,Mo,W, Hf)(CN):other | 0.40 | 1210 | 65.4 | 1910 | 14 | 1430 | 0/10 | 0.26 |

EP 0 368 336 B1

# TABLE 5

Comparative Cutting Inserts

| | Blend Composition (% by weight) | Composition of Substrate (% by weight) | $\frac{b}{a+b}$ | Substrate Surface | | Maximum Hardness | | Internal Hardness | Franctured Inserts | Frank Wear Width (mm) |
|---|---|---|---|---|---|---|---|---|---|---|
| | | | | hardness (Hv) | hardness percent (%) | Hardness (Hv) | Depth (μm) | | Tested Inserts | |
| 1 | Ni:6 TaC:8 Mo2C:10 TiN:20 TiC:other | Ni:6 (Ti,Ta,Mo)(CN): other | 0.18 | 1920 | – | 1920 | – | 1730 | 10/10 | 0.25 |
| 2 | Co:8 Ni:4 NbC:2 TaC:10 WC:10 Mo2C:10 TiN:30 TiC:other | Co:8 Ni:4 (Ti,Ta,Nb,W, Mo)(CN):other | 0.38 | 1870 | – | 1870 | – | 1670 | 9/10 | 0.28 |
| 3 | Co:4 Ni:8 NbC:3 TaC:10 WC:10 Mo2C:10 TiN:30 TiC:other | Co:4 Ni:8 (Ti,Nb,Ta,W, Mo)(CN):other | 0.35 | 1950 | – | 1950 | – | 1670 | 9/10 | 0.27 |
| 4 | Co:10 Ni:5 NbC:5 NbC:10 WC:10 TiN:35 TiC:other | Co:10 Ni:5 TiN:3 (Ti,Ta,Nb,W)(CN): other | 0.36 | 1860 | – | 1860 | – | 1650 | 9/10 | 0.30 |
| 5 | Co:12 Ni:4 TaC:15 WC:15 TiN:35 TiC:other | Co:12 Ni:4 TiN:3 (Ti,Ta,W)(CN): other | 0.48 | 1880 | – | 1880 | – | 1630 | 8/10 | 0.28 |
| 6 | Co:12 Ni:4 TaC:10 WC:30 TiN:25 TiC:other | Co:12 Ni:4 (Ti,Ta,W)(CN): other | 0.38 | 1890 | – | 1890 | – | 1650 | 7/10 | 0.30 |

Comparative Cutting Inserts

## TABLE 6

| | Blend Composition (% by weight) | Composition of Substrate (% by weight) | $\frac{b}{a+b}$ | Substrate Surface | | Maximum Hardness | | Internal Hardness | Fractured Inserts | Frank Wear Width (mm) |
|---|---|---|---|---|---|---|---|---|---|---|
| | | | | hardness (Hv) | hardness percent (%) | Hardness (Hv) | Depth (μm) | | Tested Inserts | |
| 7 | Co:12 Ni:6 NbC:2 TaC:15 WC:15 TiN:20 TiC:other | Co:12 Ni:6 (Ti,Ta,Nb,W)(CN): other | 0.25 | 1830 | – | 1830 | – | 1620 | 7/10 | 0.30 |
| 8 | Co:10 Ni:8 TaC:5 NbC:5 WC:15 TiN:30 TiC:other | Co:10 Ni:8 (Ti,Ta,Nb,W)(CN): other | 0.41 | 1810 | – | 1810 | – | 1530 | 7/10 | 0.31 |
| 9 | Co:12 Ni:6 NbC:5 TaC:5 WC:25 TiN:35 TiC:other | Co:12 Ni:6 TiN:3 (Ti,Ta,Nb, W)(CN):other | 0.48 | 1800 | – | 1800 | – | 1510 | 7/10 | 0.32 |
| 10 | Co:10 Ni:6 NbC:2 TaC:10 WC:35 TiN:25 TiC:other | Co:10 Ni:6 WC:4 (Ti,Ta,Nb,W)(CN): other | 0.41 | 1910 | – | 1910 | – | 1590 | 8/10 | 0.28 |
| 11 | Co:12 Ni:6 NbC:3 TaC:8 WC:5 Mo2C:8 TiN:35 TiC:other | Co:12 Ni:6 (Ti,Ta,Nb,W, Mo)(CN) | 0.39 | 1850 | – | 1850 | – | 1560 | 7/10 | 0.33 |
| 12 | Co:15 Ni:10 NbC:5 TaC:10 TiN:45 TiC:other | Co:15 Ni:10 TiN:5 (Ti,Ta,Nb)(CN): other | 0.58 | 1800 | – | 1800 | – | 1480 | 7/10 | 0.47 |

**TABLE 7**

| Blend Composition (% by weight) | Composition of Substrate (% by weight) | $\frac{b}{a+b}$ | Substrate Surface | | Maximum Hardness | | Internal Hardness | Fractured Inserts | Frank Wear |
|---|---|---|---|---|---|---|---|---|---|
| | | | hardness (Hv) | hardness percent (%) | Hardness (Hv) | Depth (µm) | | Tested Inserts | Width (mm) |
| 13 Co:14 Ni:14 ZrC:0.5 NbC:5 Mo2C:10 TiN:20 TiC:other | Co:14 Ni:14 (Ti,Zr,Nb, Mo)(CN):other | 0.27 | 1790 | – | 1790 | – | 1420 | 6/10 | 0.55 |
| 14 Co:14 Ni:14 ZrC:0.1 NbC:3 TaC:10 WC:10 TiN:10 TiC:other | Co:14 Ni:14 TiN:3 (Ti,Zr,Nb, Ta,W)(CN):other | 0.33 | 1710 | – | 1710 | – | 1390 | 6/10 | 0.58 |
| 15 Co:4 Ni:4 TaC:8 WC:6 Mo2C:8 TiN:20 TiC:other | Co:4 Ni:4 (Ti,Ta,W,Mo)(CN) :other | 0.19 | 1890 | – | 1890 | – | 1710 | 10/10 | 0.25 |
| 16 Co:6 Ni:6 TaC:10 WC:8 Mo2C:5 TiN:40 TiC:other | Co:6 Ni:6 TiN:3 (Ti,Ta,W, Mo)(CN):other | 0.43 | 1840 | – | 1840 | – | 1640 | 8/10 | 0.47 |
| 17 Co:7 Ni:7 NbC:2 TaC:4 WC:10 Mo2C:10 TiN:30 TiC:other | Co:7 Ni:7 (Ti,Ta,Nb,W, Mo)(CN):other | 0.43 | 1920 | – | 1920 | – | 1660 | 10/10 | 0.26 |
| 18 Co:8 Ni:10 NbC:5 TaC:5 WC:8 Mo2C:8 TiN:30 TiC:other | Co:8 Ni:10 (Ti,Ta,Nb,W, Mo)(CN):other | 0.36 | 1840 | – | 1840 | – | 1560 | 7/10 | 0.33 |

Comparative Cutting Inserts

## TABLE 8

| Blend Composition (% by weight) | Composition of Substrate (% by weight) | $\frac{b}{a+b}$ | Substrate Surface hardness (Hv) | Substrate Surface hardness percent (%) | Maximum Hardness (Hv) | Internal Hardness Depth (μm) | Internal Hardness (Hv) | Fractured Inserts / Tested Inserts | Frank Wear Width (mm) |
|---|---|---|---|---|---|---|---|---|---|
| 19 Co:16 NbC:10 WC:15 TiN:40 TiC:other | Co:16 TiN:3 (Ti,Nb,W)(CN): other | 0.48 | 1830 | – | 1830 | – | 1650 | 9/10 | 0.30 |
| 20 Co:10 Ni:12 TaC:5 Mo2C:10 WC:8 TiN:35 TiC:other | Co:10 Ni:12 (Ti,Ta,W,Mo)(CN): other | 0.49 | 1770 | – | 1770 | – | 1430 | 6/10 | 0.56 |
| 21 Co:12 Ni:6 TaC:10 Mo2C:10 WC:15 TiN:20 TiC:other | Co:12 Ni:6 (Ti,Ta,Mo,W)(CN): other | 0.28 | 1880 | – | 1880 | – | 1630 | 8/10 | 0.29 |
| 22 Co:10 Ni:10 Mo2C:15 TiN:25 TiC:other | Co:10 Ni:10 (Ti,Mo)(CN): other | 0.29 | 1810 | – | 1810 | – | 1480 | 7/10 | 0.40 |
| 23 Co:20 Ni:5 TaC:5 Mo2C:5 WC:10 TiN:25 HfC:0.5 TiC:other | Co:20 Ni:5 (Ti,Ta,Mo,W, Hf)(CN):other | 0.34 | 1760 | – | 1760 | – | 1420 | 8/10 | 0.49 |

Comparative Cutting Inserts

## Claims

1. A blade member for cutting-tools, comprising a substrate of cermet consisting, apart from unavoidable impurities, of:
    a binder phase of 5% to 30% by weight of at least one element selected from the group consisting

12

EP 0 368 336 B1

of cobalt and nickel; and

the balance being a hard dispersed phase of composite carbonitride of titanium and at least one element selected from the group consisting of tungsten, molybdenum, tantalum, niobium, hafnium and zirconium, said composite carbo-nitride satisfying the relationship of $0.2 \leqq b/(a + b) \leqq 0.7$, where $a$ and $b$ denote atomic ratios of carbon and nitrogen, respectively;

characterized in that said substrate includes a hard surface layer in which the region having the maximum hardness is present at a depth between $5\mu m$ and $50\mu m$ from a substrate surface thereof, said substrate surface having hardness of 20% to 90% of said maximum hardness.

2. A blade member for cutting-tools according to claim 1, in which said hard dispersed phase further contains at least one compound selected from the group consisting of tungsten carbide and titanium nitride.

3. A process for producing a blade member according to claim 1 comprising the steps of:
    (a) mixing powders for forming the binder and hard dispersed phases to provide a powder mixture of a prescribed composition;
    (b) compacting said powder mixture into a green compact; and
    (c) sintering said green compact to provide the cermet substrate,
    characterized in that said sintering step includes effecting initial temperature elevation to 1,100°C in a vacuum; subsequent temperature elevation from 1,100°C to a temperature range between 1,400°C and 1,500°C in a nitrogen atmosphere; and a subsequent sintering operation in a vacuum.

4. A process according to claim 3, in which said dispersed phase further contains at least one compound selected from the group consisting of tungsten carbide and titanium nitride.

**Patentansprüche**

1. Klingenteil für Schneidwerkzeuge, enthaltend ein Cermetsubstrat, das abgesehen von unvermeidbaren Verunreinigungen besteht aus:

einer Binderphase von 5 bis 30 Gew.-% von mindestens einem Element, ausgewählt aus Cobalt und Nickel; und einer harten dispergierten Phase als Rest eines Verbund-Carbonitrids von Titan und mindestens einem Element, ausgewählt aus Wolfram, Molybdän, Tantal, Niob, Hafnium und Zirkonium, wobei das Verbund-Carbonitrid der Beziehung $0,2 \leqq b/(a + b) \leqq 0,7$ genügt, worin $a$ und $b$ die Atomverhältnisse von Kohlenstoff und Stickstoff bedeuten,

dadurch gekennzeichnet, daß das Substrat eine harte Oberflächenschicht umfaßt, in welcher die Region mit der maximalen Härte in einer Tiefe zwischen $5 \mu m$ und $50 \mu m$ von der Substratoberfläche vorliegt, und die Substratoberfläche eine Härte von 20 bis 90 % der maximalen Härte hat.

2. Klingenteil für Schneidwerkzeuge nach Anspruch 1, in der die harte dispergierte Phase ferner mindestens eine Verbindung, ausgewählt aus Wolframcarbid und Titaniumnitrid, umfaßt.

3. Verfahren zur Herstellung eines Klingenteils nach Anspruch 1, umfassend die Schritte:
    (a) Mischen von Pulvern zur Bildung des Binders und der harten dispergierten Phase unter Bereitstellung einer Pulvermischung einer vorgegebenen Zusammensetzung;
    (b) Kompaktieren der Pulvermischung in einen ungebrannten Preßling; und
    (c) Sintern des ungebrannten Preßlings unter Herstellung eines Cermetsubstrats;
    dadurch gekennzeichnet, daß der Sinterschritt eine anfängliche Temperaturerhöhung auf 1.100°C im Vakuum, eine anschließende Temperaturerhöhung von 1.100°C auf einen Temperaturbereich zwischen 1.400°C und 1.500°C in einer Stickstoffatmosphäre, und einen anschließenden Sinterschritt im Vakuum umfaßt.

4. Verfahren nach Anspruch 3, worin die dispergierte Phase zusätzlich mindestens eine Verbindung, ausgewählt aus Wolframcarbid und Titaniumnitrid umfaßt.

**Revendications**

1. Lame pour outils de coupe, comprenant un substrat en cermet constitué, mises à part les impuretés inévitables, d'une phase de liant en au moins un élément choisi dans le groupe constitué par le cobalt

13

et le nickel, représentant de 5 à 30 % en poids, le complément étant une phase dispersée dure en un carbonitrure composite de titane et d'au moins un élément choisi dans le groupe constitué par le tungstène, le molybdène, le tantale, le niobium, le hafnium et le zirconium, ce carbonitrure composite satisfaisant à la relation :

$$0,2 \leq \underline{b}/(\underline{a} + \underline{b}) \leq 0,7$$

dans laquelle $\underline{a}$ et $\underline{b}$ désignent respectivement les proportions atomiques de carbone et d'azote, caractérisée en ce que le substrat contient une couche superficielle dure, dans laquelle la dureté maximale est atteinte pour une profondeur située entre 5 $\mu$m et 50 $\mu$m à partir de la surface du substrat, la dureté à la surface du substrat valant de 20 % à 90 % de ladite dureté maximale.

2. Lame pour outils de coupe conforme à la revendication 1, dans laquelle ladite phase dure dispersée contient en outre au moins un composé choisi dans le groupe constitué par le carbure de tungstène et le nitrure de titane.

3. Procédé de production d'une lame conforme à la revendication 1, qui comprend les étapes consistant à :
   (a) mélanger des poudres destinées à la formation de la phase de liant et de la phase dure dispersée, pour obtenir un mélange de poudres ayant la composition prescrite,
   (b) comprimer ce mélange de poudres en un comprimé cru, et
   (c) fritter ce comprimé cru pour obtenir un substrat en cermet,
   caractérisé en ce que ladite étape de frittage comporte une élévation initiale de la température jusqu'à 1100 °C sous vide, une élévation ultérieure de la température depuis 1100 °C jusqu'à une température située dans l'intervalle compris entre 1400 °C et 1500 °C, sous atmosphère d'azote, et une opération ultérieure de frittage sous vide.

4. Procédé conforme à la revendication 3, dans lequel ladite phase dispersée contient en outre au moins un composé choisi dans le groupe constitué par le carbure de tungstène et le nitrure de titane.

FIG.1

non-oxidizing atmosphere

nitrogen atmosphere

denitrifying atmosphere

$T_s$

$1100$

Pattern (A)

Temperature (°C)

Time

FIG.2

non-oxidizing atmosphere

nitrogen atmosphere

denitrifying atmosphere

$T_s$

$1100$

Pattern (B)

Temperature (°C)

Time

FIG.3

non-oxidizing atmosphere
nitrogen atmosphere
denitrifying atmosphere

Temperature (°C)
Ts
,1100
Pattern (C)
Time

FIG.4

non-oxidizing atmosphere
nitrogen atmosphere
denitrifying atmosphere

Temperature (°C)
Ts
,1100
Pattern (D)
Time